# EUROPÄISCHE PATENTSCHRIFT

(11) **EP 0 603 526 B1**
(45) Veröffentlichungstag und Bekanntmachung des Hinweises auf die Patenterteilung: **11.06.1997**
(21) Anmeldenummer: 93118153.1
(22) Anmeldetag: 09.11.1993
(51) Int. Cl.: B23H 7/06, B23H 7/26, B23H 7/20, G05B 19/18, B23Q 15/22

(54) **Verfahren und Vorrichtung zum elektroerosiven Bearbeiten**
Method and apparatus for electric discharge machining
Dispositif et procédé d'usinage par électro-érosion

(30) Priorität: 21.12.1992 DE 4243392
(43) Veröffentlichungstag der Anmeldung: 29.06.1994
(73) Patentinhaber: AG für industrielle Elektronik AGIE Losone bei Locarno, CH-6616 Losone/Locarno (CH)
(72) Erfinder: Lodetti, Attilio, CH-6616 Losone (CH)
(74) Vertreter: Turi, Michael, Dipl.-Phys.

(56) Entgegenhaltungen:
- US-A- 3 605 909
- PATENT ABSTRACTS OF JAPAN vol. 9, no. 229 (M-413) (1952) 14. September 1985 & JP-A-60 085 829 (MITSUBISHI DENKI K.K.) 15. Mai 1985
- PATENT ABSTRACTS OF JAPAN vol. 015, no. 321 (M-1147) 15. August 1991 & JP-A-03 121 721 (MITSUBISHI ELECTRIC CORP) 23. Mai 1991
- PATENT ABSTRACTS OF JAPAN vol. 9, no. 261 (M-422) (1984) 18. Oktober 1985 & JP-A-60 108 229 (MITSUBISHI DENKI K.K.) 13. Juni 1985
- PATENT ABSTRACTS OF JAPAN vol. 8, no. 54 (M-282) (1491) 10. März 1984 & JP-A-58 206 316 (MITSUBISHI DENKI K.K.) 1. Dezember 1983

## Beschreibung

Die Erfindung betrifft ein Verfahren zum elektroerosiven Bearbeiten eines Werkstückes nach dem Oberbegriff von Anspruch 1. Zusätzlich betrifft die Erfindung eine Vorrichtung zum elektroerosiven Schneiden eines Werkstückes nach dem Oberbegriff von Anspruch 7.

Ein besonderes Problem bei der optimalen Ausnutzung der Arbeitskapazität einer Elektroerosionsmaschine ergibt sich im sogenannten "Maschinenstillstand". Ein Maschinenstillstand ergibt sich beispielsweise während des Vorbereitens der Elektroerosions-Vorrichtung für einen neuen oder einen weiteren Arbeitsgang. Eine Verringerung des Zeitraumes eines Maschinenstillstandes führt zu geringeren Kosten sowie zu einer besseren Maschinenauslastung und ist daher stets eines der Grundanliegen der Weiterentwicklung der Elektroerosionstechnik.

Besonders das anfängliche Ausrichten bzw. Justieren des Werkstückes und/oder der Bearbeitungselektrode im Maschinen-Koordinatensystem X, Y, Z der Elektroerosions-Vorrichtung verursacht oftmals zu viel Maschinenstillstand.

Problematisch ist insbesondere das Ausrichten des Erodierdrahtes senkrecht zur Werkstückoberfläche (bzw. in einer gewünschten Ausgangsstellung) beim elektroerosiven Schneiden. Diese Operation erfordert nach dem Stand der Technik viel Zeit, eine besondere Sorgfalt in der Vorgehensweise und - beim elektroerosiven Schneiden - relativ teure Einrichtungen für die Drahtausrichtung. Nach einer bekannten Vorgehensweise wird beim elektroerosiven Schneiden zunächst das Werkstück mit Hilfe eines Komparators so ausgerichtet, daß wenigstens eine Referenz-Seitenfläche des Werkstückes relativ zu den X-/Y-Achsen bei konstant gehaltener Z-Koordinatenposition justiert wird. Bei einem runden oder einem besonders hohen Werkstück erfolgt die Ausrichtung in der X-/Y-Ebene üblicherweise mit Hilfe einer Startlochbohrung (Referenzbohrung). Das Werkstück wird solange verfahren, bis sich die Istkoordinaten der Startlochbohrung mit vorgegebenen Sollkoordinaten decken.

Die Justierung der Referenz-Seitenfläche des Werkstückes in der X-/Y-Ebene erfolgt üblicherweise mit Justierschrauben, die in ein Werkstückspann- bzw. Befestigungssystem der Elektroerosionsvorrichtung integriert sind. Dabei besteht jedoch die Gefahr einer Deformation der Justiereinrichtung während des Befestigens des Werkstückes.

Die Genauigkeit des Ausrichtens wird zusätzlich durch folgenden Effekt beeinträchtigt: Die zur Ausrichtung des Werkstückes benötigte Justiereinrichtung wird zwischen das Werkstück und den oberen Führungskopf eingefügt. Aus diesem Grund muß die Z-Achse im Gegensatz zum Schneidevorgang von der Werkstückoberfläche weg "nach oben" gefahren werden (d.h. der Drahtführungskopf wird in Z-Richtung vom Werkstück ein größeres Stück entfernt). Diese Bewegung der Z-Achse stellt eine weitere mögliche Fehler- bzw. Unsicherheitsquelle bei der Ausrichtung des Werkstückes dar. Ferner muß das Ausrichten für jedes Werkstück einzeln durchgeführt werden, auch wenn mehrere gleich- oder verschiedenförmige Werkstücke im Bearbeitungsreich der Elektroerosionsvorichtung bzw. -maschine befestigt sind.

Die Präzision der Ausrichtung des Erodierdrahtes relativ zum Werkstück ist insbesondere von der Justierung (bzw. der definierten Lage) des Werkstückes auf einem Maschinentisch (üblicherweise ca. 3 µm), von der Genauigkeit einer weiteren Einrichtung zur Ausrichtung des Drahtes und schließlich vom definierten Kontakt des Drahtes mit den üblicherweise senkrecht zueinander stehenden Wänden der Justiereinrichtung abhängig. Bei diesen Vorgängen ist außerdem der Kontaktierungsvorgang des Drahtes mit der Draht-Justiereinrichtung äußerst kritisch, da zum Justieren des Drahtes relativ zum Werkstück eine laterale Kraft auf den Draht notwendig ist. Diese laterale Kraft verursacht eine schwer zu kontrollierende laterale Abweichung und damit eine weitere Ungenauigkeit der Drahtposition senkrecht zum Werkstück.

Ein Verfahren der eingangs genannten Art ist beispielsweise aus der JP-A 58-206316 kannt. Dort ist aber eine reine Senkerosionsmaschine mit im allgemeinen vier gesteuerten - jedoch nicht in U/V-Richtung verstellbaren - Achsen beschrieben, bei welcher ein eingespanntes Werkstück mit Hilfe einer Meßelektrode seitlich abgetastet wird. Es erfolgt dann eine Transformation des vierachsigen Koordinatensystemes der Senkerosionsmaschine.

Die JP-A 3-121721 zeigt ein bekanntes Antastverfahren bei einer Drahterosionsmaschine. Dabei werden die lateralen Außenflächen des eingespannten Werstückes ermittelt, um das Zentrum des Werkstückes zu berechnen. Die Bearbeitung erfolgt dann aber ohne Ausrichten der Drahtelektrode; es wird lediglich eine "Positionskorrektur" durchgeführt, die fest für alle Bearbeitungen auf entsprechendem Werkstück gilt.

Die US-A 3,605,909 schließlich offenbart ganz allgemein eine Sensoreinrichtung zum Antasten an Oberflächen eines Werkstückes. Hierbei soll insbesondere dann Abhilfe geschaffen werden, wenn bei mehreren mit gleichen Bearbeitungsschritten aufeinanderfolgend zu bearbeitenden Werkstücken unterschiedliche Abstände vom Werkzeug zu den Oberflächen der Werkstücke herrschen.

Die Erfindung zielt darauf ab, das Ausrichten des Werkstückes bei der elektroerosiven Bearbeitung und insbesondere das Ausrichten von Werkstück und Erodierdraht beim elektroerosiven Schneiden zu vereinfachen.

Die Erfindung erreicht dieses Ziel durch die Gegenstände der Ansprüche 1 und 7, weitere Ausführungen der Erfindung sind in den abhängigen Ansprüchen beschrieben.

Ein besonderer Vorteil der Erfindung liegt demnach darin, daß mit einer (oder mehreren) Sensoreinrichtung(en) die Lage wenigstens einer der Oberflächen des Werkstückes im Koordinatensystem der Elektroerosionsmaschine ermittelt wird. Dieser Idee liegt die Erkenntnis zu Grunde, daß es für ein Ausrichten der Lage insbesondere zwischen Erodierdraht und Werkstück nicht auf ein genau senkrechtes Ausrichten der Werkstückoberfläche relativ zur Z-Achse des Maschinen-Koordinatensystems ankommt. Es ist vielmehr lediglich die Kenntnis der Lage des Werkstückes bzw. seiner Oberfläche im Koordinatensystem erforderlich. Entsprechend dieser - zu den X-/Y-/Z-Achsen des Maschinen-Koordinatensystems ev. geneigten - Lage kann dann ein sog. Bearbeitungs-Koordinatensystem festgelegt werden. Das Bearbeitungs-Koordinatensystem kann somit vom eigentlichen Ausgangssystem (dem "Maschinen-Koordinatensystem") abweichen, d.h. es ist von diesem unabhängig. Es wird jedoch aus dem Maschinen-Koordinatensystem durch eine Koordinatentransformation berechnet. Der Erodierdraht läßt sich auf der Basis der Kenntnis der Bearbeitungskoordinaten dann auch ohne eine spezielle Justiereinrichtung zum Ausrichten des Erodierdrahtes senkrecht zum Werkstück einstellen. Insbesondere die Elemente der Justiereinrichtung des Erodierdrahtes werden vorteilhaft durch eine entsprechend eingesetzte Sensoreinrichtung ersetzt. Es ist lediglich noch eine Justiereinrichtung zum Grobausrichten des Werkstückes - z.B. parallel zu den X-/Y-Achsen - erforderlich.

Die Position des Werkstückes ist bei einer entsprechenden Auslegung der Erfindung mit X-/Y-Sensoreinrichtungen auch relativ zur X- und/oder Y-Achse bestimmbar, so daß die Möglichkeit einer elektronischen Koordinatenkorrektur anstelle eines Ausrichtens mittels Justierschrauben besteht.

Nach einer besonders bevorzugten Variante der Erfindung wird als Messeinrichtung ein an einem Drahtführungskopf angeordneter (oder ein in diesen integrierter) Abstandssensor verwendet und mit dem Abstandssensor die Koordinatenlage der Werkstückoberfläche in Z-Richtung an wenigstens drei verschiedenen Punkten der Werkstückoberfläche ermittelt. Nach einer vorteilhaften Weiterbildung dieser Erfindungsvariante wird dann auf der Basis der wenigstens drei Lagebestimmungen bzw. -messungen die Ausrichtung wenigstens eines Teilbereiches der Werkstückoberfläche im Koordinatensystem berechnet. Bei einem zumindest in einem Teilbereich seiner Oberfläche ebenen Werkstück ist aus den gemessenen Z-Koordinatenlagen der Werkstückoberfläche zusammen mit den vorgegebenen X-/Y-Koordinaten der drei Messpunkte die Lage der Werkstück-Oberflächenebene im Raum, d.h. im Bearbeitungs-Koordinatensystem der Elektroerosionsvorrichtung, nach einfachen trigonometrischen Gleichungen berechenbar.

Nach einer besonders bevorzugten Weiterbildung der Erfindung wird der Erodierdraht dann auf der Basis der Lagebestimmung der Werkstückoberfläche mittels Bewegungen des Führungskopfes in U-/V-Richtung senkrecht zur Werkstückoberfläche ausgerichtet. Ein kompliziertes Ausrichten des Erodierdrahtes senkrecht zum Werkstück entfällt damit praktisch ganz. Es wird vielmehr von einem automatischen "Nullpunktverschieben" des Erodierdrahtes durch U-/V-Schlittenbewegungen ersetzt.

Nach einer weiteren bevorzugten Fortbildung der Erfindung wird das Werkstück zunächst relativ zu den X-/Y-Achsen mit Hilfe von Justierschrauben ("Justiereinrichtung") ausgerichtet. Damit wird das Werkstück in der X-/Y-Ebene ohne eine genaue Feinausrichtung des Werkstückes relativ zur Z-Achse vorjustiert. Diese "Feinausrichtung" wird dann durch das vorstehend beschriebene Ausrichten des Erodierdrahtes mit Hilfe des Abstandssensors und entsprechende U-/V-Schlittenbewegungen ersetzt.

Bei einer weiteren bevorzugten Variante der Erfindung wird der Abstandssensor nach Beenden der Lagebestimmungen ein Stück von der Werkstückoberfläche zurückgefahren. Damit wird vermieden, daß der Sensor die Oberfläche des Werkstückes ununterbrochen kontaktiert und dabei fortwährend Meßsignale abgibt. Die Länge der Wegstrecke des Zurückfahrens des Sensors richtet sich nach dessen Auflösungsvermögen, d.h. dessen Fähigkeit, Abstandsunterschiede grundsätzlich erfassen zu können. In der Praxis hat sich beispielsweise ein Zurückfahren des Sensors um ca. 0,01 mm als realistisch erwiesen. Zur Minimierung einer Kontaktgefahr der Spannelemente ist es auch möglich, den Sensor um bis zu ca. 10 mm zurückzufahren.

Neben dem Abstandssensor umfaßt eine weitere besonders bevorzugte Variante der Erfindung eine in eine numerische Steuerung (CNC) bzw. deren Software integrierte Unterroutine zur Durchführung eines Drahtausrichtens nach folgendem Schema: a) Antasten des mit dem Abstandssensor versehenen Drahtführungskopfes an das Werkstück und Fixieren der Z-Achsenposition bei Erreichen der Werkstückoberfläche sukzessive an drei verschiedenen Punkten der X-/Y-Ebene, b)Berechnen der Lage der Werkstückoberfläche im Koordinatensystem der Elektroerosions-Schneidevorrichtung, und c) Berechnen und Durchführen einer U-/V-Kompensationsbewegung des Drahtführungskopfes zur Kompensation einer Neigung der Werkstückoberfläche zur X-/Y-Ebene. Um eine Elektroerosionsvorrichtung im Sinne der Erfindung besonders vorteilhaft und umfassend "nachzurüsten" sind nach dieser Variante der Erfindung lediglich ein Abstandssensor und ein mit der vorstehend beschrieben Softwareroutine ausgestatteter Datenträger, z.B. eine Diskette, notwendig.

Im Prinzip ist es natürlich auch möglich, mit Hilfe weiterer Abstandssensoren zusätzlich die genaue Lage weiterer Werkstückseiten auszumessen. Besondere Vorteile, insbesondere in puncto Zeitersparnis bei der Ausrichtung von Werkstück und Erodierdraht, ergeben sich jedoch bereits bei der Verwendung eines einzelnen, in den Drahtführungskopf integrierten Abstands- (und/oder Tast-)sensors.

Besonders vorteilhaft ist der Messensor auch als bewegliches Zweipositionensystem mit zwei Fixpositionen "unten" und "oben" ausgelegbar. Er wird dann nach einem Meßvorgang um ca. 1 cm in eine Ruheposition vom Werkstück zurückgezogen.

Der Ausgestaltung des Sensors sind praktisch keine Grenzen gesetzt, vorteilhaft ist jedoch die Verwendung eines kleinen Sensors (der dem Platzmangel vieler Elektroerosionsmaschinen gerecht wird). Ebenso vorteilhaft ist ein Betrieb des Sensors ohne oder mit vernachlässigbarem Kraftaufwand, da hierdurch schon erfolgte Justierungen nicht wieder verändert werden.

Besonders vorteilhafte Ausgestaltungen des Sensors ergeben sich nach einer Weiterbildung der Erfindung bei einer Auslegung als elektromechanisches und/oder elektromagnetisches und/oder als elektrisch mit dem Werkstück wechselwirkendes System bzw. bei einer Auslegung als optisches, mechanisches, pneumatisches oder als infrarotes System.

Weitere bevorzugte Merkmale der Erfindung ergeben sich aus der nachfolgenden Beschreibung eines bevorzugten Ausführungsbeispieles. Das Ausführungsbeispiel ist schematisch in den beigefügten Zeichnungen dargestellt. In den Zeichnungen zeigen:
- Fig. 1: eine schematische Ansicht eines erfindungswesentlichen Teilbereiches einer erfindungsgemäßen Elektroerosions-Schneidevorrichtung;
- Fig. 2a-c: verschiedene Strategien zur Durchführung des erfindungsgemäßen Verfahrens;
- Fig. 3: eine schematische Ansicht eines weiteren Ausführungsbeispiels der Erfindung.

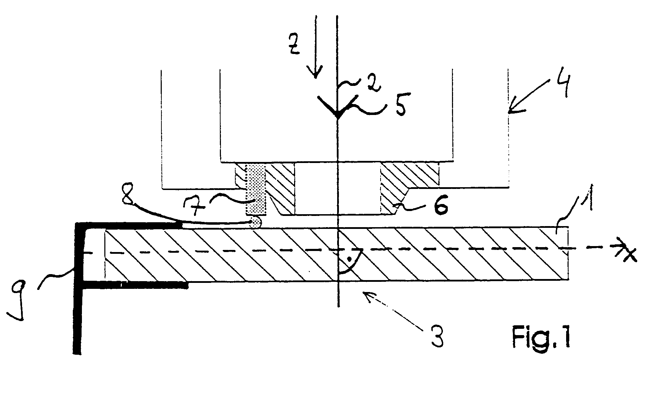

Zunächst sei Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter usw. auf Maschinen bzw. Vorrichtungen üblicher Arbeitsaufstellung und Größe sowie auf in üblicher Weise angeordnete Werkstücke.

In Fig. 1 ist der Übersichtlichkeit halber lediglich ein Teil einer erfindungsgemäßen Elektroerosions-Schneidevorrichtung bzw. einer Drahterosionsmaschine zum funkenerosiven Schneiden bzw. Bearbeiten eines Werkstückes 1 dargestellt. Grundelemente wie Maschinengestell, Spülsystem, Generator und CNC-Rechnersteuerung sind nicht dargestellt, da sie als selbstverständlich gelten.

Ein Erodierdraht 2 - auch Drahtelektrode genannt - wird in der durch einen Pfeil z dargestellten Drahttransportrichtung durch einen Arbeitsbereich 3 geführt, hier von "oben" nach "unten". Dabei durchläuft die Drahtelektrode 2 in üblicher Weise eine vertikale Öffnung eines oberen Führungskopfes 4 und eine in den Führungskopf 4 integrierte V-Führung 5. Der obere Führungskopf 4 ist nach Art eines sogenannten U-V-Schlittens über einen oberen Führungsarm (nicht dargestellt) in U-/V-Richtung verschieblich geführt und zusätzlich auch vertikal in Z-Richtung verfahr- und einstellbar. Üblicherweise weist der obere Führungskopf 4 in seinem Inneren noch eine (in Fig. 1 nicht dargestellte) Stromzuführung zum Zuführen von Generatorimpulsen und eine Spülmittelzuführung auf. Der Führungskopf 4 mündet in eine Spüldüse 6, die für eine Umströmung des Erodierdrahtes 2 mit dem Spümittel, d.h. mit dem für den funkenerosiven Prozeß nötigen Dielektrikum sorgt.

Die Drahtelektrode 2 gelangt nach ihrem Durchlauf durch das Werkstück 1 beispielsweise in einen (ebenfalls nicht dargestellten) unteren Führungskopf, der an einem unteren Führungsarm montiert und analog zum oberen Führungskopf aufgebaut ist. Da diese Bauelemente in der Funkenerosion bekannt sind, wird im folgenden nicht näher darauf eingegangen.

In den oberen Drahtführungskopf 4 ist ferner eine Sensoreinrichtung, hier ein elektrisch mit dem Werkstück wechselwirkender Abstandssensor 7, integriert. An seinem unteren Ende weist der Abstandssensor einen Sensorkopf 8 auf. Kontaktiert der Sensorkopf 8 das Werkstück 1, so leitet der Abstandssensor 7 einen elektrischen Registrierimpuls an die CNC-Steuerung der Elektroerosionsvorrichtung.

Das Werkstück 1 ist mit Hilfe einer Spannvorrichtung 9 an einem (nicht abgebildeten) Maschinentisch befestigt. Dabei dienen beispielsweise Justierschrauben in bekannter Weise als Justiereinrichtung für ein Ausrichten des Werkstückes 1 in der X-/Y-Ebene.

Der Abstandssensor 7 fixiert bzw. registriert die Z-Achsen-Koordinatenposition, sobald er in Kontakt oder in die Nähe des befestigten Werkstückes 1 kommt. Der Sensor 7 ist dabei in vorteilhafter Weise im oder am Führungskopf 4 so angeordnet, daß er den Abstand zum Werkstück 1 in der Schneiderodierposition des Führungskopfes 4 (d.h. in der unmittelbaren Nähe des Führungskopfes) bestimmen kann. Um zu vermeiden, daß der Sensor 7 ununterbrochen mißt, wird der Führungskopf 4 - bzw. in der Sprache des Technikers - die "Z-Achse" - um ca. 0,01 mm zurückgefahren.

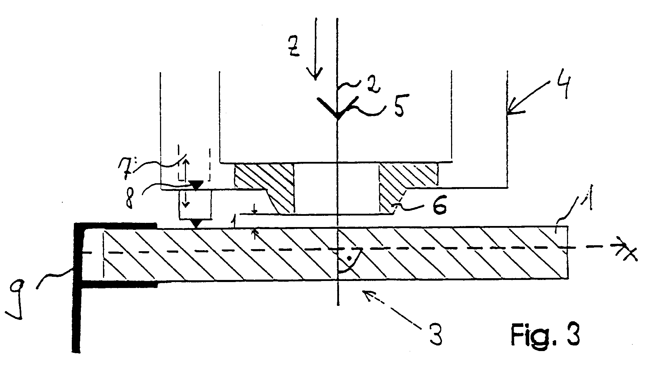

Dagegen wird der Messensor 7 beim Ausführungsbeispiel der Fig. 3 nach einem Meßvorgang um ca. 10 mm vom Werkstück in eine von der Meßposition somit deutlich beabstandete Ruheposition zurückgefahren. Der Sensorkopf 8 (hier ein Messtaster) ist dazu z.B. verschieblich in einen Kolben integriert.

Ein besonderer Vorteil der Erfindung liegt darin, daß das Auflösevermögen des Sensors keineswegs sehr hoch sein muß. Es muß lediglich in einer Größenordnung liegen, die eine Reproduzierbarkeit der Messungen erlaubt.

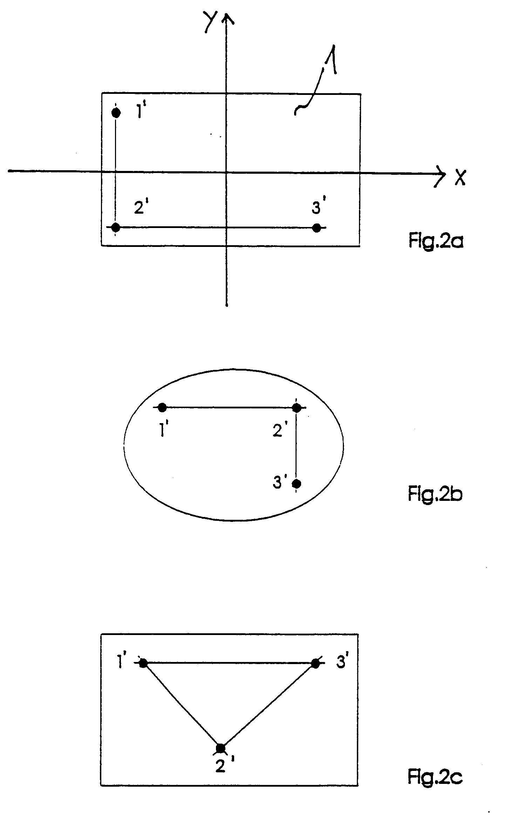

Eine besonders bevorzugte Variante des erfindungsgemäßen Verfahrens ergibt sich aus dem Zusammenspiel der erfindungsgemäßen Vorrichtung gemäß Fig. 1 mit der in den Fig. 2a-2c dargestellten Strategie.

Zunächst wird das Werkstück 1 wie bisher (z.B. mittels der bereits erwähnten Justierschrauben) relativ zu den X-/Y-Achsen ausgerichtet. Dann werden mit dem Abstandssensor 7 auf der Oberfläche des Werkstückes 1 für drei voneinander verschiedene Punkte 1',2',3' (siehe die Fig. 2a-2c) der X-/Y-Ebene die zugehörigen Z-Koordinatenwerte ausgemessen. Sobald der Sensor 7 einen Registrierimpuls abgibt, der das Erreichen der Werkstückoberfläche anzeigt, wird mittels eines bei Elektroerodiervorrichtungen üblicherweise bereits vorhandenen Z-Achsenencoders die Z-Achsenkoordinate (und/oder die X-Y-Koordinate(n)) mit einer Genauigkeit < 1 µm ermittelt. Rein mathematisch gesehen definieren die drei Punkte 1', 2', 3' eine Ebene im X-Y-Z-Koordinatensystem, woraus sich einfach die theoretische Senkrechte, d.h. die Flächennormale, zu dieser Ebene berechnen läßt. Mit Hilfe der Koordinatengleichung dieser Senkrechten wird die U-/V-Achsenposition des Führungskopfes 4 so korrigiert, daß der Erodierdraht 2 senkrecht zur Werkstückebene angeordnet ist. Mit jeweils drei Messungen pro Werkstück 1 läßt sich somit die senkrechte Lage des Drahtes definieren und speichern. Bei nichtebenen, aber bekannten Werkstück-Oberflächengeometrien ist das Verfahren entsprechend variierbar (beispielsweise bei einer parabelförmigen Oberfläche).

Fig. 2b zeigt die Anwendung der Erfindung bei einem runden Werkstück 1 und Fig. 2c veranschaulicht die Möglichkeit, anstelle von Punkten, welche die Eckpunkte eines rechtwinkligen Dreieckes bilden, ein gleichschenkliges Dreieck auszumessen. Wichtig ist nur, daß der Abstand der Punkte in der X-/Y-Ebene voneinander so groß ist, daß die Lage der Ebene im Koordinatensystem präzise bestimmbar ist.

Zusammengefaßt hat die Erfindung im wesentlichen folgende Vorteile: Die erwähnte genaue Feinjustierung der Werkstück-Oberflächenebene in der X-/Y-Ebene entfällt. Die Befestigungseinrichtung kann dementsprechend einfacher konzipiert werden. Eine mögliche Deformation der Justier- bzw. der Befestigungseinrichtung wird vermieden. Dies erhöht die Zuverlässigkeit der Vorrichtung und verbessert die Reproduzierbarkeit der Bearbeitungsergebnisse. Weitere kostpielige Justiereinrichtungen - wie z.B. die Drahtausrichtungseinheit mit entsprechenden Justierelementen - entfallen ganz. Unsicherheiten, wie sie sich nach dem Stand der Technik beispielsweise beim Kontakt mit etwaigen Referenzflächen der Justiereinrichtung in Bezug auf die Drahtlage ergeben, treten nicht mehr auf.

Schließlich kann der Abstandssensor auch während des elektroerosiven Schneidens vorteilhaft zur genauen Lagebestimmung der Z-Position des Werkstückes eingesetzt werden. Für jedes im Bearbeitungsbereich fixierte Werkstück erhält man eine definierte Position des Drahtes, ohne die Justiervorgänge der Werkstückebenen wiederholen zu müssen. Ein weiterer Vorteil ist darin zu sehen, daß die senkrechte Drahtposition aufgrund der Sicherheit und der Reproduzierbarkeit der Messung mit einer besonders hohen Genauigkeit bestimmbar ist (Messgenauigkeit ca. 0,001 mm). Schließlich ergibt sich neben der höheren Genauigkeit eine erhebliche Zeitersparnis bei Ausrichtungsvorgängen, woraus ein geringerer Maschinenstillstand und eine bessere Auslastung der Maschine resultiert.

## Patentansprüche

1. Verfahren zum elektroerosiven Bearbeiten eines Werkstückes (1) mit einer Bearbeitungselektrode, wobei wenigstens eine der Flächen des Werkstückes (1) im Koordinatensystem einer Elektroerosionsmaschine ermittelt und dann beruhend auf den Werten für die Lage der wenigstens einen Fläche des Werkstückes (1) mit Hilfe einer Koordinatentransformation ein Bearbeitungskoordinatentsystem festgelegt wird, dadurch gekennzeichnet, daß als Bearbeitungselektrode ein Erodierdraht (2) verwendet wird, auf der Basis wenigstens dreier Lagemessungen die Lage wenigstens eines Teilbereichs der Oberfläche des Werkstückes (1) ermittelt und auf das Bearbeitungskoordinatensystem transformiert wird und daß der Erodierdraht (2) auf der Basis der berechneten Lage der Oberfläche des Werkstückes (1) im Bearbeitungskoordinatensystem mittels Bewegungen des Drahtführungskopfes der Elektroerosionsmaschine in U-/V-Richtung senkrecht zu dieser Oberfläche ausgerichtet wird.

2. Verfahren nach Anspruch 1,
dadurch gekennzeichnet, daß die Lage wenigstens einer der Oberflächen des Werkstückes (1) im Maschinenkoordinatensystem mit einer Sensoreinrichtung (7) ermittelt wird.

3. Verfahren nach Anspruch 2,
dadurch gekennzeichnet, daß als Sensoreinrichtung ein am Drahtführungskopf (4) befestigter Abstandssensor (7) verwendet wird und daß mit diesem Abstandssensor (7) die Z-Koordinatenlage der Oberfläche des Werkstückes (1) an wenigstens drei in ihren X-/Y-Koordinaten voneinander verschiedenen Punkten dieser Oberflächen gemessen wird.

4. Verfahren nach einem der Ansprüche 1 bis 3,
dadurch gekennzeichnet, daß das Werkstück (1) relativ zu den X-/Y-Achsen mit Hilfe von Justierschrauben (9) oder einer Referenzachsenverschiebung via CNC ausgerichtet wird.

5. Verfahren nach einem der Ansprüche 1 bis 4,
dadurch gekennzeichnet, daß die Lagebestimmung elektromechanisch und/oder optisch und/oder elektrisch und/oder mechanisch und/oder infrarot und/oder elektromagnetisch erfolgt.

6. Verfahren nach einem der vorstehenden Ansprüche 1 bis 5,
dadurch gekennzeichnet, daß der Abstandssensor (7) nach Beenden der Lagemessungen von der Werkstückoberfläche zurückgefahren wird.

7. Vorrichtung zum elektroerosiven Schneiden eines Werkstücks (1) mit einem Erodierdraht (2), der in einem oberen Führungskopf (4) der Vorrichtung geführt ist, und einer Sensoreinrichtung (7) zur Ermittlung der Lage wenigstens einer Fläche des Werkstückes (1) im Koordinatensystem der Vorrichtung, dadurch gekennzeichnet, daß
a) die Sensoreinrichtung (7) am oberen Führungskopf (4) angeordnet und zum Abtasten der Oberfläche des Werkstückes (1) sowie zum Fixieren der Z-Achsenposition beim Erreichen der Werkstückoberfläche sukzessive an drei verschiedenen Punkten der X-/Y-Ebene ausgelegt ist; und
b) eine Steuerungseinrichtung zum
b1) Berechnen der Lage der Werkstückoberfläche im Koordinatensystem der Vorrichtung und zur Transformation der Werte für die Lage auf ein Bearbeitungskoordinatensystem, und
b2) Berechnen und Durchführen einer U-/V-Kompensationsbewegung des Führungskopfes (4) zur Kompensation einer Neigung der Werkstückoberfläche zur X-/Y-Ebene
vorgesehen ist.

8. Vorrichtung nach Anspruch 7,
dadurch gekennzeichnet, daß die Sensoreinrichtung (7) als elektromechanisches und/oder elektromagnetisches und/oder als elektrisch mit dem Werkstück (1) wechselwirkendes System ausgelegt ist.

9. Vorrichtung nach einem der Ansprüche 7 oder 8,
dadurch gekennzeichnet, daß der Sensor (7) als optisches System ausgelegt ist.

10. Vorrichtung nach einem der Ansprüche 7 oder 8,
dadurch gekennzeichnet, daß der Sensor (7) als mechanisches System ausgelegt ist.

11. Vorrichtung nach einem der Ansprüche 7 oder 8,
dadurch gekennzeichnet, daß der Sensor (7) als pneumatisches System ausgelegt ist.

12. Vorrichtung nach einem der Ansprüche 7 oder 8,
dadurch gekennzeichnet, daß der Sensor (7) als Infrarotsystem ausgelegt ist.

## Claims

1. Method of electroerosive processing of a workpiece (1) with a processing electrode, at least one of the surfaces of the workpiece (1) being determined in the co-ordinate system of an electroerosive machine and then, based on the values for the position of the at least one surface of the workpiece (1), a processing co-ordinate system is set up with the aid of a co-ordinate transformation, characterised that there is used as a processing electrode an erosive wire (2), the position of at least one partial area of the surface of the workpiece (1) is determined on the basis of at least three position measurements, and is transformed to the processing co-ordinate system, and in that the erosive wire (2) is aligned on the basis of the calculated position of the surface of the workpiece (1) in the processing co-ordinate system, by means of movement of the wire guide head of the electroerosive machine in the U/V direction vertical to this surface.

2. Method according to claim 1,
characterised in that the position of at least one of the surfaces of the workpiece (1) is determined in the machine co-ordinate system by a sensor device (7).

3. Method according to claim 2,
characterised in that there is used as a sensor device a distance sensor (7) attached to the wire guide head (4) and in that the Z co-ordinate position of the surface of the workpiece (1) is measured at at least three points of this surface different from one another in their X/Y co-ordinates by means of this distance sensor (7).

4. Method according to one of claims 1 to 3,
characterised in that the workpiece (1) is aligned relative to the X/Y axis with the aid of adjusting screws (9) or of a reference axis displacement via CNC.

5. Method according to one of claims 1 to 4,
characterised in that the position is determined electromechanically and/or optically and/or electrically and/or mechanically and/or by means of infrared and/or electromagnetically.

6. Method according to one of the preceding claims 1 to 5,
characterised in that the distance sensor (7) is retracted from the workpiece surface after termination of the position measurements.

7. Device for electroerosive cutting of a workpiece (1) with an erosive wire (2) which is guided in an upper guide head (4) of the device, and with a sensor device (7) for determining the position of at least one surface of the workpiece (1) in the co-ordinate system of the device, characterised in that
a) the sensor device (7) is located at the upper guide head (4) and is designed for scanning the surface of the workpiece (1) and for fixing the Z-axis position upon reaching the workpiece surface successively at three different points of the X/Y plane; and
b) a control device for
b1) calculation of the position of the workpiece surface in the co-ordinate system of the device and for transformation of the values for the position to a processing co-ordinate system and
b2) calculation and execution of a U/V compensation movement of the guide head (4) in order to compensate for an inclination of the workpiece surface to the X/Y plane.

8. Device according to claim 7,
characterised in that the sensor device (7) is designed as an electromechanical and/or electromagnetic and/or electrical system interacting with the workpiece (1).

9. Device according to one of claims 7 or 8,
characterised in that the sensor device (7) is designed as an optical system.

10. Device according to one of claims 7 or 8,
characterised in that the sensor device (7) is designed as a mechanical system.

11. Device according to one of claims 7 or 8,
characterised in that the sensor device (7) is designed as a pneumatic system.

12. Device according to one of claims 7 or 8,
characterised in that the sensor device (7) is designed as an infrared system.

## Revendications

1. Procédé d'usinage par électroérosion d'une pièce à usiner (1) avec une électrode d'usinage, selon lequel on détermine au moins l'une des faces de la pièce à usiner (1) dans le système de coordonnées d'une machine d'électroérosion, puis, sur la base des valeurs concernant la position de la au moins une surface de la pièce à usiner (1), on fixe à l'aide d'une transformation de coordonnées un système de coordonnées d'usinage, caractérisé en ce qu'on utilise comme électrode d'usinage un fil d'érosion (2), on détermine, sur la base d'au moins trois mesures de position, la position d'au moins une zone partielle de la surface de la pièce à usiner (1) et on la transforme dans le système de coordonnées d'usinage, et que sur la base de la position calculée de la surface de la pièce à usiner (1) dans le système de coordonnées d'usinage, on oriente le fil d'érosion (2) dans une direction U/V perpendiculaire à cette surface, au moyen de déplacements de la tête de guidage du fil de la machine d'électroérosion.

2. Procédé selon la revendication 1, caractérisé en ce que la position d'au moins l'une des surfaces de la pièce à usiner (1) dans le système de coordonnées de la machine est déterminée à l'aide d'un dispositif à capteur (7).

3. Procédé selon la revendication 2, caractérisé en ce qu'on utilise comme dispositif à capteur, un capteur de distance (7) fixé sur la tête (4) de guidage du fil et qu'on mesure, avec ce capteur de distance (7), la position de coordonnées suivant la coordonnée Z de la surface de la pièce à usiner (1) en au moins trois points de cette surface, qui diffèrent les uns des autres en ce qui concerne leurs coordonnées X/Y.

4. Procédé selon l'une des revendications 1 à 3, caractérisé en ce que la pièce à usiner (5) est orientée par rapport aux axes X/Y à l'aide de vis d'ajustement (9) ou au moyen d'un déplacement des axes de référence au moyen d'une commande CNC.

5. Procédé selon l'une des revendications 1 à 4, caractérisé en ce que la détermination de position s'effectue d'une manière électromécanique et/ou optique et/ou électronique et/ou mécanique et/ou par infrarouge et/ou par voie électromagnétique.

6. Procédé selon l'une des revendications précédentes 1 à 5, caractérisé en ce que le capteur de distance (7) est rétracté à partir de la surface de la pièce à usiner, à la fin des mesures de position.

7. Dispositif pour découper par électroérosion une pièce à usiner (1), comportant un fil d'érosion (2) qui est guidé dans une tête supérieure de guidage (4) du dispositif, et un dispositif à capteur (7) pour déterminer la position d'au moins une surface de la pièce à usiner (1) dans le système de coordonnées du dispositif, caractérisé en ce que
a) le dispositif à capteur (7) est disposé sur la tête supérieure de guidage (4) et est conçu pour réaliser l'exploration de la surface de la pièce à usiner (1) ainsi que pour fixer la position de l'axe Z lorsque la surface de la pièce à usiner est atteinte, et ce successivement en trois points différents du plan X/Y; et qu'il est prévu
b) un dispositif de commande pour
b1) calculer la position de la surface de la pièce à usiner dans le système de coordonnées du dispositif et transformer les valeurs de la position dans un système de coordonnées d'usinage, et
b2) calculer et exécuter un déplacement de compensation U/V de la tête de guidage (4) pour compenser une inclinaison de la surface de la pièce à usiner par rapport au plan X/Y.

8. Dispositif selon la revendication 7, caractérisé en ce que le dispositif à capteur (7) est agencé sous la forme d'un système électromécanique et/ou électromagnétique et/ou sous la forme d'un système coopérant électriquement avec la pièce à usiner (1).

9. Dispositif selon l'une des revendications 7 ou 8, caractérisé en ce que le capteur (7) est agencé sous la forme d'un système optique.

10. Dispositif selon l'une des revendications 7 ou 8, caractérisé en ce que le capteur (7) est agencé sous la forme d'un système mécanique.

11. Dispositif selon l'une des revendications 7 ou 8, caractérisé en ce que le capteur (7) est agencé sous la forme d'un système pneumatique.

12. Dispositif selon l'une des revendications 7 ou 8, caractérisé en ce que le capteur (7) est agencé sous la forme d'un système à infrarouge.
